(19) Europäisches Patentamt
European Patent Office
Office européen des brevets

(11) **EP 4 207 331 A1**

(12) **EUROPEAN PATENT APPLICATION**
published in accordance with Art. 153(4) EPC

(43) Date of publication:
**05.07.2023 Bulletin 2023/27**

(51) International Patent Classification (IPC):
**H01M 4/02** (2006.01)   **H01M 4/04** (2006.01)

(21) Application number: **21928726.5**

(52) Cooperative Patent Classification (CPC):
**Y02E 60/10**

(22) Date of filing: **07.07.2021**

(86) International application number:
**PCT/CN2021/104958**

(87) International publication number:
**WO 2022/183648 (09.09.2022 Gazette 2022/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.03.2021 CN 202110242963**

(71) Applicant: **Ningde Amperex Technology Limited Zhangwan Town, Jiaocheng District Ningde City Fujian 352100 (CN)**

(72) Inventor: **ZHANG, Fei Ningde City, Fujian 352100 (CN)**

(74) Representative: **Icosa 83 avenue Denfert-Rochereau 75014 Paris (FR)**

(54) **ELECTROCHEMICAL APPARATUS AND ELECTRONIC APPARATUS**

(57) This application provides an electrochemical device and an electronic device. The electrochemical device includes a positive electrode, a negative electrode, a separator, and an electrolytic solution. The positive electrode includes a positive current collector and a positive active material layer disposed on at least one surface of the positive current collector. The positive active material layer includes a positive active material. A volume of the positive active material layer is V1 $cm^3$. A true volume of the positive active material is V2 $cm^3$, and $0.8 \leq V2/V1 \leq 0.92$. In some embodiments of this application, the positive active material layer possesses a relatively high packing efficiency and density, and can store more energy under a condition that the volume is constant, and reduce a space in which the electrolytic solution infiltrates the positive active material, thereby reducing reactions between a positive electrode material and the electrolytic solution under a high voltage and a high temperature, improving the cycle performance of the electrochemical device under a high voltage and a high temperature, and improving the low-temperature discharge performance.

**Description**

**CROSS-REFERENCE TO RELATED APPLICATIONS**

This application is based on and claims priority to Chinese Patent Application No. 202110242963.2, filed on March 5, 2021 and entitled "ELECTROCHEMICAL DEVICE AND ELECTRONIC DEVICE", which is incorporated herein by reference in its entirety.

**TECHNICAL FIELD**

This application relates to the technical field of electrochemistry, and in particular, to an electrochemical device and an electronic device.

**BACKGROUND**

Electrochemical devices (such as a lithium-ion battery) are widely used in various fields. With the progress of the society, people are posing higher requirements on an energy density of the electrochemical devices.

In some technologies, people attempt to discharge more energy by increasing voltage, so as to increase the energy density of the electrochemical devices. However, under a high-voltage system, the electrochemical devices have encountered a series of new technical bottlenecks. For example, for a lithium-ion battery that uses lithium cobalt oxide as a positive electrode material, on the one hand, when the low-temperature discharge performance of the lithium-ion battery is excellent, the high-temperature cycle performance declines. When the high-temperature cycle performance is improved to some extent, the low-temperature discharge performance declines to some extent. A trade-off is hardly achievable between the high-temperature cycle performance and the low-temperature discharge performance. On the other hand, under the high-voltage system, the surface of the lithium cobalt oxide exhibits high oxidizability, and is prone to react with an electrolytic solution to result in a poor interface relationship between a positive active material and the electrolytic solution. In handling a problem of the interface relationship, not only the low-temperature discharge performance needs to be prevented from being low, but also the high-temperature cycle performance needs to be ensured to be relatively high. The problem is not easy to solve.

In some related technologies, attempts are made to solve the problem by coating and refining the surface of the positive active material with metal oxide or other materials. However, the coating material hinders the transfer of lithium ions to some extent, thereby increasing direct current resistance (DCR, Directive Current Resistance), reducing the rate performance, and deteriorating the high- and low-temperature discharge performance of the lithium-ion battery.

Therefore, how to make the electrochemical device achieve both excellent high-temperature cycle performance and excellent low-temperature discharge performance is an urgent technical problem to be solved in the art.

**SUMMARY**

This application provides an electrochemical device and an electronic device to reduce reactions between a surface of a positive electrode active material and an electrolytic solution while increasing an energy density, improve the cycle performance of the electrochemical device under a high voltage and a high temperature, and improve the low-temperature discharge performance.

In some embodiments, this application discloses an electrochemical device. The electrochemical device includes a positive electrode, a negative electrode, a separator, and an electrolytic solution. The positive electrode includes a positive current collector and a positive active material layer disposed on at least one surface of the positive current collector. The positive active material layer includes a positive active material. A volume of the positive active material layer is V1 cm$^3$. A true volume of the positive active material is V2 cm$^3$, and $0.8 \leq V2/V1 \leq 0.92$.

In some embodiments, the electrolytic solution further includes at least one of a nitrile compound or a carboxylate compound. The nitrile compound accounts for m of a total mass of the electrolytic solution, and $0.5\% \leq m \leq 10\%$. The carboxylate compound accounts for n of the total mass of the electrolytic solution, and $12\% \leq n \leq 40\%$.

In some embodiments, $0.006 \leq m/(V2/V1) \leq 0.095$.

In some embodiments, $0.16 \leq n/(V2/V1) \leq 0.5$.

In some embodiments, the nitrile compound includes at least one of: 1,3,6-hexanetricarbonitrile, succinonitrile, adiponitrile, suberonitrile, glutaronitrile, sebaconitrile, ethylene glycol bis(propionitrile)ether, 1,3,5-pentanetricarbonitrile, p-tolunitrile, 2,2-difluorosuccinonitrile, tricyanobenzene, transbutenedinitrile, or transhexenedinitrile; and/or the carboxylate compound includes at least one of ethyl acetate, methyl propionate, ethyl propionate, propyl propionate, butyl propionate, amyl propionate, or propyl butyrate.

In some embodiments, the positive active material includes $Li_xMl_yM2_zO_2$, where $0.95 \leq x \leq 1.03$, $0.9 \leq y \leq 1.05$,

and $0.002 \leq z \leq 0.012$. M1 includes at least one of Ni, Co, or Mn. M2 includes at least one of Al, Mg, Ti, Zr, La, Y, Sc, or Ca.

In some embodiments, a mass percent of M2 in the positive active material is 0.1% to 1.5%.

In some embodiments, an electrolyte retention coefficient of the electrolytic solution in the electrochemical device is k mAh/g, and $0.001 \leq k \leq 0.0022$.

In some embodiments, the positive electrode satisfies at least one of (a) to (c):

(a) a particle diameter $D_{v50}$ of the positive active material is 5.0 $\mu$m to 20 $\mu$m;
(b) a BET specific surface area of the positive active material is 0.07 $m^2$/g to 0.4 $m^2$/g; and
(c) a compacted density of the positive active material layer is not less than 4.0 $g/cm^3$.

In some embodiments, the positive active material includes a first particle and a second particle. The first particle is larger than the second particle in diameter.

In some embodiments of this application, an electronic device is disclosed, including the electrochemical device according to any one of the foregoing aspects.

The electrochemical device according to the embodiments of this application includes a positive electrode, a negative electrode, a separator, and an electrolytic solution. The positive electrode includes a positive current collector and a positive active material layer disposed on at least one surface of the positive current collector. The positive active material layer includes a positive active material. A volume of the positive active material layer is V1 $cm^3$. A true volume of the positive active material is V2 $cm^3$, and $0.8 \leq V2/V1 \leq 0.92$. In some embodiments of this application, the positive active material layer possesses a relatively high packing efficiency and density, and can store more energy under a condition that the volume is constant, and reduce a space in which the electrolytic solution infiltrates the positive active material, thereby reducing reactions between a positive electrode material and the electrolytic solution under a high voltage and a high temperature, improving the cycle performance of the electrochemical device under a high voltage and a high temperature, and improving the low-temperature discharge performance.

## DETAILED DESCRIPTION OF EMBODIMENTS

The following describes embodiments of this application in more detail. This application may be implemented in various forms, but is not to be construed as being limited to the embodiments expounded herein. Instead, the embodiments are intended to enable a more thorough and comprehensive understanding of this application.

Electrochemical devices such as a lithium-ion battery are widely used in various fields. In the related technologies, a capacity of the lithium-ion battery is increased by increasing voltage. However, many problems arises under a high-voltage system. On the one hand, it is difficult to achieve excellent low-temperature discharge performance and excellent high-temperature cycle performance concurrently. On the other hand, the surface of the positive active material exhibits high oxidization under a high voltage, and is prone to oxidize the electrolytic solution.

To solve at least a part of the foregoing problems, in some embodiments, this application discloses an electrochemical device. The electrochemical device includes a positive electrode, a negative electrode, a separator, and an electrolytic solution. The positive electrode includes a positive current collector and a positive active material layer disposed on at least one surface of the positive current collector. The positive active material layer includes a positive active material. A volume of the positive active material layer is V1 $cm^3$. A true volume of the positive active material is V2 $cm^3$, and $0.8 \leq V2/V1 \leq 0.92$.

In some embodiments, the true volume V2 of the positive active material means the volume of the positive active material in the positive active material layer. The range of $0.8 \leq V2/V1 \leq 0.92$ means that the positive active material accounts for a high percentage in the positive active material layer. The higher the percentage of the positive active material, the higher the packing efficiency and density of the positive active material layer, the more energy that can be stored in the same volume, and the more space-efficient the positive active material. Due to the high percentage of the positive active material, the porosity of the positive active material layer is low, and the infiltration space between the electrolytic solution and the positive active material is relatively small, thereby helping to reduce the contact reactions between the positive active material and the electrolytic solution under a high voltage (such as 4.45 V or above) and a high temperature, and improving the cycle performance under a high voltage and a high temperature. In addition, the contact area between particles of the positive active material is large, and the transmission path is short, thereby helping to improve the low-temperature discharge performance of the electrochemical device. As a ratio (V2/V1) of the volume (V1 $cm^3$) of the positive active material layer to the true volume (V2) of the positive active material, the V2/V1 ratio value can be controlled by controlling the calendering pressure, the calendering time, or the number of times of calendering in a process of preparing the positive electrode, or by other means. The means of controlling is not particularly limited in this application, as long as the range of $0.8 \leq V2/V1 \leq 0.92$ is satisfied.

In some embodiments, the electrolytic solution further includes at least one of a nitrile compound or a carboxylate compound. The nitrile compound accounts for m of a total mass of the electrolytic solution, and $0.5\% \leq m \leq 10\%$. The

carboxylate compound accounts for n of the total mass of the electrolytic solution, and $12\% \leq n \leq 40\%$. In some embodiments, the nitrile compound can form a protection film on the surface of the positive active material to protect the surface of the positive active material, improve the cycle performance of the positive active material, and prevent redox reactions between the positive active material and a solvent. In some embodiments, the carboxylate compound can improve the efficiency of transferring lithium ions in the electrolytic solution, so that the electrochemical device achieves excellent low-temperature discharge performance while maintaining relatively good high-temperature cycle performance.

In some embodiments, $0.006 \leq m/(V2/V1) \leq 0.095$. In some embodiments, $m/(V2/V1)$ represents a mass fraction of an amount of nitrile compound added. If $m/(V2/V1)$ is less than 0.006, the amount of nitrile compound added is deficient, thereby being unable to sufficiently protect the surface of the positive active material and lowering the high-temperature cycle performance. If $m/(V2/V1)$ is greater than 0.095, the nitrile compound may reduce the conductivity of the electrolytic solution, thereby affecting the low-temperature discharge performance of the electrochemical device.

In some embodiments, $0.16 \leq n/(V2/V1) \leq 0.5$. $n/(V2/V1)$ represents a mass fraction of the carboxylate compound. If $n/(V2/V1)$ is less than 0.16, the carboxylate compound exerts insignificant effects on improving the efficiency of transferring lithium ions in the electrolytic solution, thereby resulting in inferior low-temperature discharge performance. If $n/(V2/V1)$ is greater than 0.5, the carboxylate compound may impair an SEI (solid electrolyte interphase, solid electrolyte interphase) film on the surface of the positive active material, thereby increasing side reactions and adversely affecting the high-temperature cycle performance.

In some embodiments, the nitrile compound includes at least one of: 1,3,6-hexanetricarbonitrile (HTCN), succinonitrile (SN), adiponitrile (ADN), suberonitrile, glutaronitrile, sebaconitrile, ethylene glycol bis(propionitrile)ether (DENE), 1,3,5-pentanetricarbonitrile, p-tolunitrile, 2,2-difluorosuccinonitrile, tricyanobenzene, transbutenedinitrile, or transhexenedinitrile.

In some embodiments, the carboxylate compound includes at least one of ethyl acetate, methyl propionate, ethyl propionate, propyl propionate, butyl propionate, amyl propionate, or propyl butyrate.

In some embodiments, the positive active material includes $Li_xMl_yM2_zO_2$, where $0.90 \leq x \leq 1.03$, $0.9 \leq y \leq 1.05$, and $0.002 \leq z \leq 0.012$. M1 includes at least one of Ni, Co, or Mn. M2 includes at least one of Al, Mg, Ti, Zr, La, Y, Sc, or Ca. In some embodiments, a relatively large amount of lithium ions may be deintercalated from the positive active material of the electrochemical device under a high voltage, thereby being prone to cause lattice collapse of the positive active material. Doping the positive active material with an amount of M2 can mitigate lattice distortion caused by the deintercalation of lithium ions, thereby stabilizing the lattice structure and helping to stabilize the discharge performance and cycle performance of the electrochemical device under a high voltage.

In some embodiments, a mass percent of M2 in the positive active material is 0.1% to 1.5%. In some embodiments, when the mass percent of M2 in the positive active material is less than 0.1%, the content of M2 is relatively low, and the improvement effect may be insignificant. However, when the mass percent of M2 in the positive active material is greater than 1.5%, the capacity of the positive active material may be caused to decrease, and the high-temperature performance and the low-temperature performance of the positive active material may be caused to decline.

In some embodiments, an electrolyte retention coefficient of the electrolytic solution in the electrochemical device is k mAh/g, and $0.001 \leq k \leq 0.0022$. In some embodiments, k falling within this range means that the electrolytic solution is sufficient to fully infiltrate the electrochemical device and is scarcely wasted.

In some embodiments, the particle diameter $D_{v50}$ of the positive active material is 5.0 $\mu$m to 20 $\mu$m. In some embodiments, if the particle diameter $D_{v50}$ of the positive active material is less than 5.0 $\mu$m, the cycle performance may decline. If the particle diameter $D_{v50}$ of the positive active material is greater than 20 $\mu$m, the rate performance may decline.

In some embodiments, the BET specific surface area of the positive active material is 0.07 $m^2$/g to 0.4 $m^2$/g. In some embodiments, if the specific surface area of the positive active material is less than 0.07 $m^2$/g, the rate performance may be low. If the specific surface area of the positive active material is greater than 0.4 $m^2$/g, the electrolytic solution may be consumed rapidly.

In some embodiments, the compacted density of the positive active material layer is not less than 4.0 $g/cm^3$. In some embodiments, if the compacted density of the positive active material layer is less than 4.0 $g/cm^3$, the volumetric energy density may be excessively low. In some embodiments, the compacted density of the positive active material layer is not greater than 4.5 $g/cm^3$. In some embodiments, the compacted density of the positive active material layer is greater than 4.5 $g/cm^3$, the positive current collector may break off.

In some embodiments, the positive active material includes a first particle and a second particle. The first particle is larger than the second particle in diameter. In some embodiments, mixing the first particle and the second particle that vary in diameter helps to reduce gaps in the positive active material layer and increase the volumetric energy density.

In some embodiments, the negative electrode includes a negative current collector and a negative active material layer disposed on at least one surface of the negative current collector. The negative active material layer includes a negative active material. The negative active material may include one of or a combination of soft carbon, hard carbon, natural graphite, artificial graphite, silicon, silicon oxide, silicon-carbon composite, lithium titanium oxide, or silicon-oxygen composite, each of which can receive lithium ions and from each of which the lithium ions can be deintercalated.

In some embodiments, the positive current collector may be an aluminum foil, or may be another positive current collector commonly used in the art. In some embodiments, the thickness of the positive current collector may be 1 $\mu$m to 20 $\mu$m. In some embodiments, the positive active material layer may be coated on merely a part of regions of the positive current collector. In some embodiments, the thickness of the positive active material layer may be 10 $\mu$m to 200 $\mu$m. The thickness of the positive active material layer is the thickness of the positive active material layer on one surface of the positive current collector. Understandably, the examples above are merely illustrative, and other thicknesses may apply as appropriate.

In some embodiments, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. Especially, the polyethylene and the polypropylene are highly effective in preventing short circuits, and improve stability of the battery through a turn-off effect. In some embodiments, the thickness of the separator falls within a range of approximately 5 $\mu$m to 100 $\mu$m.

In some embodiments, the separator is a porous separator made of polypropylene or polyethylene, or is a porous film made of inorganic materials such as ceramic non-woven fabric, or may be composed of two or more porous films stacked into a laminated structure.

In some embodiments, a porous layer may be further included in a surface of the separator. The porous layer is disposed on at least one surface of the separator. The porous layer includes inorganic particles and a binder. The inorganic particles are at least one selected from aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), ceria ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, a diameter of a pore of the separator is within a range of approximately 0.01 $\mu$m to 1 $\mu$m. The binder in the porous layer is at least one selected from polyvinylidene difluoride, a vinylidene difluoride-hexafluoropropylene copolymer, a polyamide, polyacrylonitrile, polyacrylic ester, polyacrylic acid, sodium polyacrylate, sodium carboxymethyl cellulose, polyvinylpyrrolidone, polyvinyl ether, poly methyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, the electrochemical device is a jelly-roll structure or a stacked structure.

In some embodiments, the electrochemical device includes, but is not limited to, a lithium-ion battery. In some embodiments, the electrochemical device may further include an electrolyte. The electrolyte may be one or more of a gel electrolyte, a solid-state electrolyte, and an electrolytic solution. The electrolytic solution includes a lithium salt and a nonaqueous solvent. The lithium salt is one or more selected from $LiPF_6$, $LiBF_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, the lithium salt is $LiPF_6$ because it provides a high ionic conductivity and improves cycle characteristics.

The nonaqueous solvent may be a carbonate compound, an ether compound, another organic solvent, or any combination thereof. The carbonate compound may be a chain carbonate compound, a cyclic carbonate compound, a fluorocarbonate compound, or any combination thereof. Examples of the chain carbonate compound are diethyl carbonate (DEC), dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate compound are ethylene carbonate (EC), propylene carbonate (PC), butylene carbonate (BC), vinyl ethylene carbonate (VEC), or any combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof. Examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or any combination thereof.

An embodiment of this application further provides an electronic device containing the electrochemical device. The electronic device according to the embodiments of this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a bicycle, a lighting appliance, a toy, a game console, a watch, a power tool, a flashlight, a camera, a large household battery, a lithium-ion capacitor, and the like.

Some specific embodiments and comparative embodiments are enumerated below to give a clearer description of this application, using a lithium-ion battery as an example.

Preparing a positive electrode:

Mixing lithium cobalt oxide, acetylene black, and polyvinylidene difluoride evenly at a mass ratio of 95: 3: 2, dispersing the mixture into a solvent, and stirring and vacuumizing to obtain a positive slurry. Then coating a positive current collector aluminum foil with the slurry by a doctor blade method or by spraying, where the thickness of the aluminum foil may be 8 $\mu$m to 13 $\mu$m. Under the foregoing conditions, the positive active material, the binder, and the conductive agent may be mixed with the solvent at any ratio as long as they are well dispersed. Then coating and drying the mixture, compacting it with a roller press machine to obtain a positive active material layer, and performing slitting, cutting, and tab welding to obtain a positive electrode (also called a positive electrode plate).

Preparing a negative electrode:

Mixing artificial graphite, sodium carboxymethyl cellulose, and styrene butadiene rubber evenly at a mass ratio of 96: 2: 2 to make a negative electrode mixture, and dispersing the negative electrode mixture into a solvent to form a slurry. Coating the negative current collector with the prepared slurry evenly, where the thickness of the current collector is 4 $\mu$m to 9 $\mu$m. Coating the current collector with the slurry evenly by a doctor blade method or by spraying, and drying the slurry. Compacting it with a roller press machine to obtain a positive active material layer, and performing slitting, cutting, and tab welding to obtain a negative electrode (also called a negative electrode plate).

Preparing an electrolytic solution:

Mixing ethylene carbonate (EC), propylene carbonate (PC), and diethyl carbonate (DEC) evenly at a mass ratio of 1: 1: 1 in an argon-atmosphere glovebox in which the moisture content is less than 10 ppm, and adding $LiPF_6$ and stirring evenly to form an base electrolytic solution, in which the concentration of $LiPF_6$ is 1.15 mol/L. Based on the total mass of the electrolytic solution, adding 3 wt% fluoroethylene carbonate and 2 wt% 1,3-propane sultone. Formulating the electrolytic solution based on the following embodiments and comparative embodiments.

Preparing a lithium-ion battery:

Winding the obtained positive electrode, negative electrode, separator, and the like in a specified manner to form an electrode assembly, and then putting the electrode assembly into a packaging bag. Then sealing the packaging bag, injecting the electrolytic solution, and performing chemical formation to ultimately complete the preparation of the battery.

**Comparative Embodiment 1**

When the ratio (V2/V1) of the true volume (V2) of the positive active material in the positive electrode plate to the volume (V1) of the positive active material layer is 0.75, the compacted density is 3.75 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile (ADN) and 1,3,6-hexanetricarbonitrile (HTCN) mixed at a mass ratio of 2:1. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The content of aluminum in the positive active material is 0.6 wt%.

**Comparative Embodiment 2**

When the ratio (V2/V1) of the true volume of the positive active material in the positive electrode plate to the volume of the positive active material layer is 0.75, the compacted density is 3.75 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The

content of aluminum in the positive active material is 0.6 wt%.

**Comparative Embodiment 3**

When the ratio (V2/V1) of the true volume of the positive active material in the positive electrode plate to the volume of the positive active material layer is 0.75, the compacted density is 3.75 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile (ADN) and 1,3,6-hexanetricarbonitrile (HTCN) mixed at a mass ratio of 2:1. The mass fraction n/(V2/V1) of ethyl propionate in the electrolytic solution is 0. The BET specific surface area of the positive active material is 0.32 m$^2$/g. D$_{v50}$ is 10 μm. The content of aluminum in the positive active material is 0.6 wt%.

**Comparative Embodiment 4**

When the ratio (V2/V1) of the true volume of the positive active material in the positive electrode plate to the volume of the positive active material layer is 0.75, the compacted density is 3.75 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0. The mass fraction n/(V2/V1) of ethyl propionate in the electrolytic solution is 0. The BET specific surface area of the positive active material is 0.32 m$^2$/g. D$_{v50}$ of the positive active material is 10 μm. The content of aluminum in the positive active material is 0.6 wt%.

**Embodiment 1**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0. The mass fraction n/(V2/V1) of ethyl propionate in the electrolytic solution is 0.25. The BET specific surface area of the positive active material is 0.32 m$^2$/g. D$_{v50}$ of the positive active material is 10 μm. The content of aluminum in the positive active material is 0.6 wt%.

**Embodiment 2**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile (ADN) and 1,3,6-hexanetricarbonitrile (HTCN) mixed at a mass ratio of 2:1. The mass fraction n/(V2/V1) of ethyl propionate in the electrolytic solution is 0.25. The BET specific surface area of the positive active material is 0.32 m$^2$/g. D$_{v50}$ of the positive active material is 10 μm. The content of aluminum in the positive active material is 0.6 wt%.

**Embodiment 3**

When the ratio (V2/V1) of the true volume of the positive active material in the positive electrode plate to the volume of the positive active material layer is 0.83, the compacted density is 4.2 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. D$_{v50}$ of the positive active material is 10 μm. The content of aluminum in the positive active material is 0.6 wt%.

**Embodiment 4**

When the ratio (V2/V1) of the true volume of the positive active material in the positive electrode plate to the volume of the positive active material layer is 0.80, the compacted density is 4.0 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. D$_{v50}$ of the positive active material is 10 $\mu$m. The content of aluminum in the positive active material is 0.6 wt%.

**Embodiment 5**

When the ratio (V2/V1) of the true volume of the positive active material in the positive electrode plate to the volume of the positive active material layer is 0.89, the compacted density is 4.5 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. D$_{v50}$ of the positive active material is 10 $\mu$m. The content of aluminum in the positive active material is 0.6 wt%.

**Embodiment 6**

When the ratio (V2/V1) of the true volume of the positive active material in the positive electrode plate to the volume of the positive active material layer is 0.86, the positive electrode plate, the separator, and the negative electrode plate are wound to form an electrode assembly, and then the electrolytic solution with an electrolyte retention coefficient of 0.0014 is injected. The electrolytic solution contains no carboxylate. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The BET specific surface area of the positive active material is 0.5 m$^2$/g. D$_{v50}$ of the positive active material is 5 $\mu$m. The content of aluminum in the positive active material is 0.6 wt%.

**Embodiment 7**

When the ratio (V2/V1) of the true volume of the positive active material in the positive electrode plate to the volume of the positive active material layer is 86%, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.005. The nitrile compounds are adiponitrile and 1,3,6-hexanetricarbonitrile mixed at a mass ratio of 2:1. The mass fraction n/(V2/V1) of ethyl propionate in the electrolytic solution is 2.5. The BET specific surface area of the positive active material is 0.32 m$^2$/g. D$_{v50}$ of the positive active material is 10 $\mu$m. The content of aluminum in the positive active material is 0.6 wt%.

**Embodiment 8**

When the ratio (V2/V1) of the true volume of the active material in the positive electrode plate to the volume of the positive active material layer is 86%, the positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.003. The nitrile compounds are adiponitrile and 1,3,6-hexanetricarbonitrile mixed at a mass ratio of 2:1. The mass fraction n/(V2/V1) of ethyl propionate in the electrolytic solution is 2.5. The BET specific surface area of the positive active material is 0.32 m$^2$/g. D$_{v50}$ of the positive active material is 10 $\mu$m. The content of aluminum in the positive active material is 0.6 wt%.

**Embodiment 9**

When the ratio (V2/V1) of the true volume of the positive active material in the positive electrode plate to the volume of the positive active material layer is 86%, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.025. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. D$_{v50}$ of the positive active material is 10 $\mu$m. The content of aluminum in the positive active material is 0.6 wt%.

**Embodiment 10**

When the ratio (V2/V1) of the true volume of the positive active material in the positive electrode plate to the volume of the positive active material layer is 86%, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 3:1. The mass fraction n/(V2/V1) of ethyl propionate in the electrolytic solution is 0.25. The BET specific surface area of the positive active material is 0.32 m$^2$/g. D$_{v50}$ of the positive active material is 10 $\mu$m. The content of aluminum in the positive active material is 0.6 wt%.

**Embodiment 11**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 4:1. The mass fraction n/(V2/V1) of ethyl propionate in the electrolytic solution is 0.25. The BET specific surface area of the positive active material is 0.32 m$^2$/g. D$_{v50}$ of the positive active material is 10 $\mu$m. The content of aluminum in the positive active material is 0.6 wt%.

**Embodiment 12**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 1:1.5. The mass fraction n/(V2/V1) of ethyl propionate in the electrolytic solution is 0.25. The BET specific surface area of the positive active material is 0.32 m$^2$/g. D$_{v50}$ of the positive active material is 10 $\mu$m. The content of aluminum in the positive active material is 0.6 wt%.

**Embodiment 13**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile, ethylene glycol bis(propionitrile)ether (DENE), and 1,3,6-hexanetricarbonitrile mixed at a mass ratio of 2: 1: 1. The mass fraction n/(V2/V1) of ethyl propionate in the electrolytic solution is 0.25. The BET specific surface area of the positive active material is 0.32 m$^2$/g. D$_{v50}$ of the positive active material is 10 $\mu$m. The content of aluminum in the positive active material is 0.6 wt%.

**Embodiment 14**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.075. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. D$_{v50}$ of the positive active material is 10 $\mu$m. The content of aluminum in the positive active material is 0.6 wt%.

**Embodiment 15**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.095. The nitrile compounds are adiponitrile and 1,3,6-hexanetricarbonitrile mixed at a mass ratio of 2:1. The mass fraction n/(V2/V1) of ethyl propionate in the electrolytic solution is 2.5. The BET specific surface area of the positive active material is 0.32 m$^2$/g. $D_{v50}$ of the positive active material is 10 $\mu$m. The content of aluminum in the positive active material is 0.6 wt%.

**Embodiment 16**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.10. The nitrile compounds are succinonitrile and 1,3,6-hexanetricarbonitrile mixed at a mass ratio of 2:1. The mass fraction n/(V2/V1) of ethyl propionate in the electrolytic solution is 2.5. The BET specific surface area of the positive active material is 0.32 m$^2$/g. $D_{v50}$ of the positive active material is 10 $\mu$m. The content of aluminum in the positive active material is 0.6 wt%.

**Embodiment 17**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.02. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The content of aluminum in the positive active material is 0.6 wt%.

**Embodiment 18**

When the ratio (V2/V1) of the true volume of the positive active material in the positive electrode plate to the volume of the positive active material layer is 0.86, the positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.003. The nitrile compounds are adiponitrile and 1,3,6-hexanetricarbonitrile mixed at a mass ratio of 2:1. The mass fraction n/(V2/V1) of ethyl propionate in the electrolytic solution is 0.1. The BET specific surface area of the positive active material is 0.32 m$^2$/g. $D_{v50}$ of the positive active material is 10 $\mu$m. The content of aluminum in the positive active material is 0.6 wt%.

**Embodiment 19**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.12. The BET specific surface area of the positive active material is 0.32 m$^2$/g. $D_{v50}$ of the positive active material is 10 $\mu$m. The content of aluminum in the positive active material is 0.6 wt%.

**Embodiment 20**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.18. The BET specific surface area of the positive active material is 0.32 m$^2$/g. $D_{v50}$ of the positive active material is 10 $\mu$m. The content of aluminum in the positive active material is 0.6 wt%.

**Embodiment 21**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of carboxylate in the electrolytic solution is 0.25, and the mass ratio of ethyl propionate to propyl propionate is 1:1. The BET specific surface area of the positive active material is 0.32 m$^2$/g. $D_{v50}$ of the positive active material is 10 $\mu$m. The content of aluminum in the positive active material is 0.6 wt%.

**Embodiment 22**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.32. The BET specific surface area of the positive active material is 0.32 m$^2$/g. $D_{v50}$ of the positive active material is 10 $\mu$m. The content of aluminum in the positive active material is 0.6 wt%.

**Embodiment 23**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.38. The BET specific surface area of the positive active material is 0.32 m$^2$/g. $D_{v50}$ of the positive active material is 10 $\mu$m. The content of aluminum in the positive active material is 0.6 wt%.

**Embodiment 24**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.42. The BET specific surface area of the positive active material is 0.32 m$^2$/g. $D_{v50}$ of the positive active material is 10 $\mu$m. The content of aluminum in the positive active material is 0.6 wt%.

**Embodiment 25**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.46. The BET specific surface area of the positive active material is 0.32 m$^2$/g. D$_{v50}$ of the positive active material is 10 $\mu$m. The content of aluminum in the positive active material is 0.6 wt%.

**Embodiment 26**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.50. The BET specific surface area of the positive active material is 0.32 m$^2$/g. D$_{v50}$ of the positive active material is 10 $\mu$m. The content of aluminum in the positive active material is 0.6 wt%.

**Embodiment 27**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.52. The BET specific surface area of the positive active material is 0.32 m$^2$/g. D$_{v50}$ of the positive active material is 10 $\mu$m. The content of aluminum in the positive active material is 0.6 wt%.

**Embodiment 28**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.07 m$^2$/g. D$_{v50}$ of the positive active material is 20 $\mu$m. The content of aluminum in the positive active material is 0.6 wt%.

**Embodiment 29**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.18 m$^2$/g. D$_{v50}$ of the positive active material is 16 $\mu$m. The content of aluminum in the positive active material is 0.6 wt%.

**Embodiment 30**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.34 m$^2$/g. D$_{v50}$ of the positive active material is 8 $\mu$m. The content of aluminum in the positive active material is 0.6 wt%.

**Embodiment 31**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.4 m$^2$/g. $D_{v50}$ of the positive active material is 5 $\mu$m. The content of aluminum in the positive active material is 0.6 wt%.

**Embodiment 32**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0008 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The content of aluminum in the positive active material is 0.6 wt%.

**Embodiment 33**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.001 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The content of aluminum in the positive active material is 0.6 wt%.

**Embodiment 34**

When the ratio (V2/V1) of the true volume of the positive active material in the positive electrode plate to the volume of the positive active material layer is 86%, the compacted density is 4.3 g/cm$^3$. The positive electrode plate, the separator, and the negative electrode plate are wound to form an electrode assembly, and then the electrolytic solution with an electrolyte retention coefficient of 0.002 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The content of aluminum in the positive active material is 0.6 wt%.

**Embodiment 35**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0022 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The content of aluminum in the positive active material is 0.6 wt%.

**Embodiment 36**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0018 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The content of aluminum in the positive active material is 0.6 wt%.

**Embodiment 37**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The content of aluminum in the positive active material is 0.15 wt%.

**Embodiment 38**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The content of aluminum in the positive active material is 0.25 wt%.

**Embodiment 39**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 m$^2$/g. $D_{v50}$ of the positive active material is 10 $\mu$m. The content of aluminum in the positive active material is 0.4 wt%.

**Embodiment 40**

When the ratio (V2/V1) of the true volume of the positive active material in the positive electrode plate to the volume of the positive active material layer is 0.86, the positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.5 m$^2$/g. $D_{v50}$ of the positive active material is 8 $\mu$m. The content of aluminum in the positive active material is 0.6 wt%.

**Embodiment 41**

When the ratio (V2/V1) of the true volume of the positive active material in the positive electrode plate to the volume of the positive active material layer is 0.86, the compacted density is 4.3 g/cm$^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 $m^2$/g. $D_{v50}$ of the positive active material is 10 $\mu$m. The content of aluminum in the positive active material is 1.2 wt%.

**Embodiment 42**

When the ratio (V2/V1) of the true volume of the positive active material in the positive electrode plate to the volume of the positive active material layer is 0.86, the compacted density is 4.3 g/$cm^3$. The positive electrode plate, the separator, and the negative electrode plate are wound to form an electrode assembly, and then the electrolytic solution with an electrolyte retention coefficient of 0.0014 is injected. The mass fraction m/(V2/V1) of nitrile compounds in the electrolytic solution is 0.04. The nitrile compounds are adiponitrile and 1,3,6-hexanetricarbonitrile mixed at a mass ratio of 2:1. The mass fraction n/(V2/V1) of ethyl propionate in the electrolytic solution is 0.25. The BET specific surface area of the positive active material is 0.32 $m^2$/g. $D_{v50}$ of the positive active material is 10 $\mu$m. The content of aluminum in the positive active material is 1.5 wt%.

Cycle test:

Taking 8 batteries prepared in each comparative embodiment and each embodiment, and testing the batteries at 45 °C. Charging the batteries at a constant current rate of 0.5 C until the voltage reaches the cut-off voltage of 4.45 V (or above), and then charging the batteries at a constant voltage of 4.45 V until the current is lower than 0.025 C so that the batteries are in a fully charged state (100% SOC) under a voltage of 4.45 V (or above). After the fully charged state is reached, discharging the batteries at a rate of 0.5 C, and recording the discharge capacity $D_0$ at this time as a reference. Repeating the foregoing steps, and recording the discharge capacities $D_1$, $D_2$, and so on after the batteries undergo 1 cycle, 2 cycles, and so on, respectively. Calculating the capacity retention rate based on the following formula:

$$\text{Cycle capacity retention rate after the } n^{th} \text{ cycle} = D_n/D_0, n = 1, 2, 3, 4, 5...$$

Calculating the number of cycles when the cycle capacity retention rate is 80%.

Testing the low-temperature capacity retention rate:

First, adjusting the temperature to 25 °C. Then discharging the battery at a rate of 0.2 C until the voltage reaches 3.0 V, and leaving the battery to stand for 5 minutes. Charging the battery at a constant current rate of 0.5 C until the voltage reaches 4.45 V, and then charging the battery at a constant voltage until the current drops to 0.025 C. Then leaving the battery to stand at a temperature of 25 °C for 60 minutes, and then discharging the battery until a voltage of 3.0 V. Recording the discharge capacity D at this time, and leaving the battery to stand for 60 minutes. Then charging the battery under 25 °C at a constant current rate of 0.5 C until the voltage reaches 4.45 V, and then charging the battery at a constant voltage until the current drops to 0.025 C. Adjusting the temperature to -10 °C and leaving the battery to stand for 60 minutes. Then discharging the battery at a constant current of 0.2 C until the voltage reaches 3.0 V, and recording the discharge capacity $D_a$ at this time. The discharge capacity retention rate of the battery under 0.2 C, -10 °C is equal to $D_a$/D $\times$ 100%.

Testing the weight of a blank aluminum foil wafer:

Dissembling a battery, and taking out a positive electrode plate. Soaking the positive electrode plate in dimethyl carbonate (DMC), and then cleaning and drying the positive electrode plate. Obtaining 20 wafers by punching a blank aluminum foil region of the positive electrode plate by using a small button cell punch head with a diameter of 14 mm (the area of each wafer is 154.025 $mm^2$), where the blank aluminum foil region carries no positive active material layer or is stripped of the active material layer. Then measuring the total mass of the wafers and calculating the average mass (unit: mg). At the same time, measuring the thicknesses of the wafers and calculating the average thick, that is, $h_0$ $\mu$m.

Calculating the electrolyte retention coefficient k:

First, discharging the battery until the voltage reaches 3.0 V, and obtaining a discharge capacity of the battery, that is, $D_0$ mAh. Weighing the overall mass of the battery, that is, M1 grams. Then disassembling the battery, and soaking the positive electrode, the negative electrode, the separator, and the outer packaging in dimethyl carbonate for 30 minutes and cleaning them separately. Then putting them into a 50 °C oven to dry for 5 to 8 hours. After they are dried, measuring the total weight of the positive electrode, the negative electrode, the separator, and the outer package, that is, M2 grams. Obtaining the mass of the electrolytic solution, that is, A grams, where A = M1 - M2. The electrolyte retention coefficient of the electrolytic solution is k = (M1 - M2)/$D_0$.

Testing the particle size:

The test instrument is Malvern laser particle size analyzer. The model of the instrument is Mastersizer 2000. The weight of the sample is 1 gram. Without ultrasonication, the sample is dispersed at a rotation speed of 3000 r/min by using water as a dispersant.

Taking approximately 1 gram of powder sample of the positive active material, and then putting the sample into the instrument for testing. The instrument outputs two curves. One is a volumetric distribution curve of the particles, and the other is a quantitative distribution curve of the particles. The two curves correspond to each other, but are just different manifestations of the same distribution. $D_{v50}$ is a particle diameter of the sample measured when the cumulative volume percentage of the sample reaches 50% in a volume-based particle size distribution by starting from small-diameter particles.

Testing the BET (specific surface area):

The test instrument is a specific surface area tester, and the model of the instrument is Micromeritics Tristar II 3020.

The positive electrode material is tested in the following steps: Step I: Weighing the material (the weight of the positive active material is 2 to 12 grams), putting the material into a sample tube, and then putting the sample tube into the instrument. Step II: Degassing. Turning on the power of the degassing station to perform vacuum degassing. Step III: After degassing, moving the sample tube to a cooling port outside the heating port, cooling the sample for at least 10 minutes, and keeping vacuumizing at the same time. Step IV: After the sample tube is cooled to a room temperature, backfilling the sample tube with nitrogen for approximately 30 seconds. After backfilling, removing the sample tube from the degassing port as soon as the sample tube is cooled to the room temperature, and then plugging the sample tube with a plastic head. Measuring the overall mass of the sample in a balance room, and subtracting the mass of the empty tube to obtain the mass of the degassed sample. Step V: Analyzing the measurement values by using software of the instrument, and obtaining data.

Testing the compacted density:

Step I: Punching the positive electrode plate into wafers by using a punching machine, where the diameter of the punch head of the punching machine is d mm. Obtaining 20 wafers by punching the region coated with the positive active material on both sides, where the weight of the blank aluminum foil wafer is $m_0$ mg (for the test process, refer to the weight test of the blank aluminum foil wafer). The thickness is known, that is, $h_0$ $\mu$m (for the test process, refer to the weight test of the blank aluminum foil wafer).

Step II: Weighing the wafers, and recording the weights of the wafers as $m_1$ to $m_{20}$ (mg).

Step III: Measuring the thicknesses of the wafers, and recording the thicknesses as $h_1$ to $h_{20}$ ($\mu$m) corresponding to the weights respectively.

Step IV: Calculating the compacted density PD based on the following formula: $PD_n = [(m_n - m_0)/(\pi \times (d/2)^2/(h_n - h_0) \times 1000]$. Therefore, $PD = [PD_1 + PD_2 + ... + PD_n]/n$, where n is a value falling within (1, 20).

Determining V1 and V2: V1 = S $\times$ (H - h), where S is the area of the sample of the positive electrode plate, and is constant 1540.25 mm². H is the thickness of the electrode plate, and h is the thickness of the current collector. V2 = [$M_{electrode}$ - (S $\times$ areal density $\rho$1 of aluminum foil)]/(true density $\rho$2 of positive electrode material), where $M_{electrode}$ is the weight of the positive electrode plate with an area of S. The areal density of the aluminum foil is a known parameter, and is calculated based on the specific processing data. The true density of the positive electrode material is an intrinsic characteristic of the material.

Table 1 shows the parameters and performance test results in each embodiment and each comparative embodiment.

Table 1

| Embod iment | V2/V1 | m/ (V2/V1) | Nitrile compound | Nitrile comp ound ratio | n/ (V2/VI) | BET (m²/g) | D$_{V50}$ (μm) | Compacted density (g/cm³) | Electrolyte retention coefficient k | Mass percent of aluminum in positive electrode | Cycles under 45 °C | Low-temperature capacity retention rate at 0.2 C and -10 °C (%) |
|---|---|---|---|---|---|---|---|---|---|---|---|---|
| 1 | 0.86 | 0 | \ | \ | 0.25 | 0.32 | 10 | 4.3 | 0.0014 | 0.60% | 400 | 90 |
| 2 | 0.86 | 0.04 | AND: HTCN | 2:1 | 0.25 | 0.32 | 10 | 4.3 | 0.0014 | 0.60% | 600 | 95 |
| 3 | 0.83 | 0.04 | AND: HTCN | 2:1 | 0.25 | 0.32 | 10 | 4.20 | 0.0014 | 0.60% | 550 | 93 |
| 4 | 0.80 | 0.04 | AND: HTCN | 2:1 | 0.25 | 0.32 | 10 | 4.0 | 0.0014 | 0.60% | 500 | 93 |
| 5 | 0.89 | 0.04 | AND: HTCN | 2:1 | 0.25 | 0.32 | 10 | 4.5 | 0.0014 | 0.60% | 450 | 88 |
| 6 | 0.86 | 0.04 | AND: HTCN | 2:1 | 0 | 0.32 | 5 | 4.3 | 0.0014 | 0.60% | 550 | 80 |
| 7 | 0.86 | 0.005 | AND: HTCN | 2:1 | 0.25 | 0.32 | 10 | 4.3 | 0.0014 | 0.60% | 350 | 95 |
| 8 | 0.86 | 0.003 | AND: HTCN | 2:1 | 0.25 | 0.32 | 10 | 4.3 | 0.0014 | 0.60% | 310 | 94 |
| 9 | 0.86 | 0.025 | AND: HTCN | 2:1 | 0.25 | 0.32 | 10 | 4.3 | 0.0014 | 0.60% | 587 | 95 |
| 10 | 0.86 | 0.04 | AND: HTCN | 3:1 | 0.25 | 0.32 | 10 | 4.3 | 0.0014 | 0.60% | 580 | 85 |
| 11 | 0.86 | 0.04 | AND: HTCN | 4:1 | 0.25 | 0.32 | 10 | 4.3 | 0.0014 | 0.60% | 600 | 80 |
| 12 | 0.86 | 0.04 | AND: HTCN | 1:1.5 | 0.25 | 0.32 | 10 | 4.3 | 0.0014 | 0.60% | 550 | 80 |
| 13 | 0.86 | 0.04 | ADN: DENE: HTCN | 2: 1: 1 | 0.25 | 0.32 | 10 | 4.3 | 0.0014 | 0.60% | 550 | 80 |

| Embodiment | V2/V1 | m/(V2/V1) | Nitrile compound | Nitrile compound ratio | n/(V2/VI) | BET (m²/g) | $D_{v50}$ (μm) | Compacted density (g/cm³) | Electrolyte retention coefficient k | Mass percent of aluminum in positive electrode | Cycles under 45 °C | Low-temperature capacity retention rate at 0.2 C and -10 °C (%) |
|---|---|---|---|---|---|---|---|---|---|---|---|---|
| 14 | 0.86 | 0.075 | AND:HTCN | 2:1 | 0.25 | 0.32 | 10 | 4.3 | 0.0014 | 0.60% | 550 | 83 |
| 15 | 0.86 | 0.095 | AND:HTCN | 2:1 | 0.25 | 0.32 | 10 | 4.3 | 0.0014 | 0.60% | 500 | 76 |
| 16 | 0.86 | 0.10 | SN:HTCN | 2:1 | 0.25 | 0.32 | 10 | 4.3 | 0.0014 | 0.60% | 480 | 72 |
| 17 | 0.86 | 0.02 | AND:HTCN | 2:1 | 0.25 | 0.32 | 10 | 4.3 | 0.0014 | 0.60% | 590 | 94 |
| 18 | 0.86 | 0.003 | AND:HTCN | 2:1 | 0.1 | 0.32 | 10 | 4.3 | 0.0014 | 0.60% | 420 | 96 |
| 19 | 0.86 | 0.04 | AND:HTCN | 2:1 | 0.12 | 0.32 | 10 | 4.3 | 0.0014 | 0.60% | 620 | 86 |
| 20 | 0.86 | 0.04 | AND:HTCN | 2:1 | 0.18 | 0.32 | 10 | 4.3 | 0.0014 | 0.60% | 620 | 88 |
| 21 | 0.86 | 0.04 | AND:HTCN | 2:1 | 0.25 | 0.32 | 10 | 4.3 | 0.0014 | 0.60% | 605 | 93 |
| 22 | 0.86 | 0.04 | AND:HTCN | 2:1 | 0.32 | 0.32 | 10 | 4.3 | 0.0014 | 0.60% | 400 | 92 |
| 23 | 0.86 | 0.04 | AND:HTCN | 2:1 | 0.38 | 0.32 | 10 | 4.3 | 0.0014 | 0.60% | 600 | 95 |
| 24 | 0.86 | 0.04 | AND:HTCN | 2:1 | 0.42 | 0.32 | 10 | 4.3 | 0.0014 | 0.60% | 587 | 93 |
| 25 | 0.86 | 0.04 | AND:HTCN | 2:1 | 0.46 | 0.32 | 10 | 4.3 | 0.0014 | 0.60% | 562 | 92 |
| 26 | 0.86 | 0.04 | AND:HTCN | 2:1 | 0.50 | 0.32 | 10 | 4.3 | 0.0014 | 0.60% | 536 | 92 |
| 27 | 0.86 | 0.04 | AND:HTCN | 2:1 | 0.52 | 0.32 | 10 | 4.3 | 0.0014 | 0.60% | 473 | 89 |

(continued)

| Embodiment | V2/V1 | m/ (V2/V1) | Nitrile compound | Nitrile compound ratio | n/ (V2/VI) | BET (m²/g) | $D_{v50}$ (μm) | Compacted density (g/cm³) | Electrolyte retention coefficient k | Mass percent of aluminum in positive electrode | Cycles under 45 °C | Low-temperature capacity retention rate at 0.2 C and -10 °C (%) |
|---|---|---|---|---|---|---|---|---|---|---|---|---|
| 28 | 0.86 | 0.04 | AND: HTCN | 2:1 | 0.25 | 0.07 | 20 | 4.3 | 0.0014 | 0.60% | 550 | 85 |
| 29 | 0.86 | 0.04 | AND: HTCN | 2:1 | 0.25 | 0.18 | 16 | 4.3 | 0.0014 | 0.60% | 600 | 90 |
| 30 | 0.86 | 0.04 | AND: HTCN | 2:1 | 0.25 | 0.34 | 8 | 4.3 | 0.0014 | 0.60% | 550 | 92 |
| 31 | 0.86 | 0.04 | AND: HTCN | 2:1 | 0.25 | 0.4 | 5 | 4.3 | 0.0014 | 0.60% | 500 | 94 |
| 32 | 0.86 | 0.04 | AND: HTCN | 2:1 | 0.25 | 0.32 | 10 | 4.3 | 0.0008 | 0.60% | 250 | 86 |
| 33 | 0.86 | 0.04 | AND: HTCN | 2:1 | 0.25 | 0.32 | 10 | 4.3 | 0.0010 | 0.60% | 300 | 86 |
| 34 | 0.86 | 0.04 | AND: HTCN | 2:1 | 0.25 | 0.32 | 10 | 4.3 | 0.0020 | 0.60% | 600 | 88 |
| 35 | 0.86 | 0.04 | AND: HTCN | 2:1 | 0.25 | 0.32 | 10 | 4.3 | 0.0022 | 0.60% | 600 | 86 |
| 36 | 0.86 | 0.04 | AND: HTCN | 2:1 | 0.25 | 0.32 | 10 | 4.3 | 0.0018 | 0.60% | 608 | 90 |
| 37 | 0.86 | 0.04 | AND: HTCN | 2:1 | 0.25 | 0.32 | 10 | 4.3 | 0.0014 | 0.15% | 290 | 85 |
| 38 | 0.86 | 0.04 | AND: HTCN | 2:1 | 0.25 | 0.32 | 10 | 4.3 | 0.0014 | 0.25% | 510 | 87 |
| 39 | 0.86 | 0.04 | AND: HTCN | 2:1 | 0.25 | 0.32 | 10 | 4.3 | 0.0014 | 0.40% | 560 | 89 |
| 40 | 0.86 | 0.04 | AND: HTCN | 2:1 | 0.25 | 0.5 | 8 | 4.3 | 0.0014 | 0.15% | 340 | 87 |

| Embod iment | V2/V1 | m/ (V2/V1) | Nitrile compound | Nitrile comp ound ratio | n/ (V2/VI) | BET (m²/g) | $D_{v50}$ (μm) | Compacted density (g/cm³) | Electrolyte retention coefficient k | Mass percent of aluminum in positive electrode | Cycles under 45 °C | Low-temperature capacity retention rate at 0.2 C and -10 °C (%) |
|---|---|---|---|---|---|---|---|---|---|---|---|---|
| 41 | 0.86 | 0.04 | AND: HTCN | 2:1 | 0.25 | 0.32 | 10 | 4.3 | 0.0014 | 1.20% | 420 | 82 |
| 42 | 0.86 | 0.05 | AND: HTCN | 2:1 | 0.25 | 0.32 | 10 | 4.3 | 0.0014 | 1.50% | 400 | 79 |
| Comparative Embodiment | | | | | | | | | | | | |
| 1 | 0.75 | 0.05 | AND: HTCN | 2:1 | 0.25 | 0.32 | 10 | 3.75 | 0.0014 | 0.60% | 300 | 79 |
| 2 | 0.75 | 0 | \ | \ | 0.25 | 0.32 | 10 | 3.75 | 0.0014 | 0.60% | 175 | 82 |
| 3 | 0.75 | 0.05 | AND: HTCN | 2:1 | 0 | 0.32 | 10 | 3.75 | 0.0014 | 0.60% | 200 | 60 |
| 4 | 0.75 | 0 | \ | \ | 0 | 0.32 | 10 | 3.75 | 0.0014 | 0.60% | 155 | 58 |
| Note: "Cycles under 45 °C" is the number of cycles undergone by the battery under 45 °C when the capacity retention rate is 80%, and represents the high-temperature cycle performance. "Low-temperature capacity retention rate at 0.2 C and -10 °C" represents the low-temperature discharge performance. "\" in the table means none. | | | | | | | | | | | | |

As can be seen from Embodiments 2 to 5, when other parameters remain unchanged, as the value of V2/V1 increases from 80% to 89%, the high-temperature cycle performance and low-temperature discharge performance of the lithium-ion battery remain relatively good. However, the overall performance tends to rise first and then fall. Therefore, in some embodiments, it is defined that $0.8 \leq V2/V1 \leq 0.92$ to ensure that the high-temperature cycle performance and low-temperature discharge performance of the lithium-ion battery are relatively high.

As can be seen from Embodiment 1 and Embodiment 2, when other conditions are the same, both the high-temperature cycle performance and the low-temperature capacity retention rate in Embodiment 2 are higher than those in Embodiment 1. A possible reason is that nitrile compounds are added in Embodiment 2 but not added in Embodiment 1. Compared with Embodiment 2, Embodiment 1 lacks nitrile compounds, and is unable to fully protect the surface of the positive active material. Consequently, the high-temperature cycle performance and the low-temperature discharge performance of the lithium-ion battery are lower than those in Embodiment 2. As can be seen from Embodiments 1, 7 to 9, 14, 15, and 17, when other parameters remain unchanged, with the increase of m/(V2/V1), the high-temperature cycle performance of the lithium-ion battery gradually rises first and then falls. However, when the value of m/(V2/V1) is excessively high, the low-temperature discharge performance of the lithium-ion battery begins to decline. Therefore, in some embodiments, it is defined that $0.006 \leq m/(V2/V1) \leq 0.095$.

As can be seen from Comparative Embodiment 3 and Comparative Embodiment 4, when the value of n/(V2/V1) is relatively small, the low-temperature discharge performance of the lithium-ion battery is low. As can be seen from Embodiments 19 to 27, when other parameters remain unchanged, with the increase of the value of n/(V2/V1), the high-temperature cycle performance of the lithium-ion battery falls first and then rises, and the low-temperature discharge performance of the lithium-ion battery gradually rises to a relatively high level and then basically remains unchanged. A possible reason is that the carboxylate compound helps to improve the efficiency of transferring lithium ions in the electrolytic solution, and therefore, helps to improve the low-temperature discharge performance and, to some extent, improve the high-temperature cycle performance. When the content of the carboxylate compound is excessively high, the SEI film on the surface of the positive active material may be impaired under high-temperature and high-voltage conditions, thereby declining the high-temperature cycle performance. Therefore, in some embodiments, it is defined that $0.16 \leq n/(V2/V1) \leq 0.38$.

As can be seen from Embodiments 28 to 32, with the increase of the BET specific surface area of the positive active material, the high-temperature cycle performance and low-temperature discharge performance of the lithium-ion battery are improved to some extent. When the specific surface area falls within the ranges specified in Embodiments 24 to 27, both the high-temperature cycle performance and the low-temperature discharge performance of the lithium-ion battery are relatively high. Therefore, in some embodiments, it is defined that the BET specific surface area of the positive active material is 0.07 $m^2$/g to 0.4 $m^2$/g. The specific surface area is inversely proportional to the particle diameter of the positive active material. Therefore, in some embodiments, it is defined that the particle diameter $D_{v50}$ of the positive active material is 5.0 $\mu$m to 20 $\mu$m.

As can be seen from Embodiment 33 to Embodiment 36, with the increase of the electrolyte retention coefficient k, both the high-temperature cycle performance and the low-temperature discharge performance of the lithium-ion battery gradually rise to a relatively high level and then basically remain unchanged. A possible reason is that, when the electrolyte retention coefficient k is relatively low, the electrolytic solution is insufficient, and therefore, the lithium-ion battery underperforms; and, when the electrolyte retention coefficient k is relatively high, the electrolytic solution is sufficient, and the increase of the electrolytic solution exerts no significant effect on the high-temperature cycle performance and the low-temperature discharge performance, but may reduce the capacitance per unit mass. Therefore, in some embodiments, it is defined that $0.001 \leq k \leq 0.0022$.

As can be seen from Embodiments 37, 38, 39, and 41, the increase in the mass percent of aluminum in the positive active material causes the high-temperature cycle performance and low-temperature discharge performance of the lithium-ion battery to rise first and then fall. Therefore, in some embodiments, it is defined that the mass percent of M2 in the positive active material is 0.1% to 1.5%.

What is described above is merely exemplary embodiments of this application and the technical principles thereof. A person skilled in the art understands that the scope of disclosure in this application is not limited to the technical solutions formed by a specific combination of the foregoing technical features, but also covers other technical solutions formed by arbitrarily combining the foregoing technical features or equivalents thereof, for example, a technical solution formed by replacing any of the foregoing features with a technical feature disclosed herein and serving similar functions.

**Claims**

1. An electrochemical device, **characterized in that** the electrochemical device comprises:

   a positive electrode, a negative electrode, a separator, and an electrolytic solution, wherein

the positive electrode comprises a positive current collector and a positive active material layer disposed on at least one surface of the positive current collector, the positive active material layer comprises a positive active material, a volume of the positive active material layer is V1 $cm^3$, a true volume of the positive active material is V2 $cm^3$, and $0.8 \leq V2/V1 \leq 0.92$.

2. The electrochemical device according to claim 1, **characterized in that** the electrolytic solution further comprises at least one of a nitrile compound or a carboxylate compound, the nitrile compound accounts for m of a total mass of the electrolytic solution, $0.5\% \leq m \leq 10\%$, the carboxylate compound accounts for n of the total mass of the electrolytic solution, and $12\% \leq n \leq 40\%$.

3. The electrochemical device according to claim 2, **characterized in that** $0.006 \leq m/(V2/V1) \leq 0.095$.

4. The electrochemical device according to claim 2, **characterized in that** $0.16 \leq n/(V2/V1) \leq 0.5$.

5. The electrochemical device according to claim 2, **characterized in that**

the nitrile compound comprises at least one of: 1,3,6-hexanetricarbonitrile, succinonitrile, adiponitrile, suberonitrile, glutaronitrile, sebaconitrile, ethylene glycol bis(propionitrile)ether, 1,3,5-pentanetricarbonitrile, p-tolunitrile, 2,2-difluorosuccinonitrile, tricyanobenzene, transbutenedinitrile, or transhexenedinitrile; and/or
the carboxylate compound comprises at least one of ethyl acetate, methyl propionate, ethyl propionate, propyl propionate, butyl propionate, amyl propionate, or propyl butyrate.

6. The electrochemical device according to claim 1, **characterized in that** the positive active material comprises $Li_xMl_yM2_zO_2$, wherein $0.90 \leq x \leq 1.03$, $0.9 \leq y \leq 1.05$, $0.002 \leq z \leq 0.012$, M1 comprises at least one of Ni, Co, or Mn, and M2 comprises at least one of Al, Mg, Ti, Zr, La, Y, Sc, or Ca.

7. The electrochemical device according to claim 6, **characterized in that**
a mass percent of M2 in the positive active material is 0.1% to 1.5%.

8. The electrochemical device according to claim 1, **characterized in that**
an electrolyte retention coefficient of the electrolytic solution in the electrochemical device is k mAh/g, and $0.001 \leq k \leq 0.0022$.

9. The electrochemical device according to claim 1, **characterized in that** the positive electrode satisfies at least one of (a) to (c):

(a) a particle diameter $D_{v50}$ of the positive active material is 5.0 $\mu$m to 20 $\mu$m;
(b) a BET specific surface area of the positive active material is 0.07 $m^2$/g to 0.4 $m^2$/g; and
(c) a compacted density of the positive active material layer is not less than 4.0 $g/cm^3$.

10. An electronic device, **characterized in that** the electronic device comprises the electrochemical device according to any one of claims 1 to 9.

## INTERNATIONAL SEARCH REPORT

| International application No. |
| --- |
| **PCT/CN2021/104958** |

### A. CLASSIFICATION OF SUBJECT MATTER

H01M 4/02(2006.01)i; H01M 4/04(2006.01)n

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 电池, 正极, 阴极, 层, 真体积, 体积, 保液系数, 质量, 电解液, 电解质, 腈, 羧酸酯, 粒径, Dv50, BET, 比表面积, 压实密度, cell, battery, positive, negative, electrode, layer, true, volume, liquid, retention, factor, mass, electrolyte, nitrile, carboxylate, particle, size, specific, surface, area, density

### C. DOCUMENTS CONSIDERED TO BE RELEVANT

| Category* | Citation of document, with indication, where appropriate, of the relevant passages | Relevant to claim No. |
| --- | --- | --- |
| PX | CN 113036081 A (NINGDE AMPEREX TECHNOLOGY LTD.) 25 June 2021 (2021-06-25) claims 1-10 | 1-10 |
| X | CN 101816083 A (PANASONIC CORP.) 25 August 2010 (2010-08-25) description paragraphs 0002, 0015-0153 | 1, 6-10 |
| Y | CN 101816083 A (PANASONIC CORP.) 25 August 2010 (2010-08-25) description paragraphs 0002, 0015-0153 | 2-5 |
| Y | CN 101640290 A (SANYO ELECTRIC CO., LTD.) 03 February 2010 (2010-02-03) description page 2 paragraph 7 to page 4 paragraph 11, table 1 | 2-5 |
| A | CN 109671950 A (TOYOTA MOTOR CORPORATION) 23 April 2019 (2019-04-23) entire document | 1-10 |
| A | CN 106558681 A (TOYOTA MOTOR CORPORATION) 05 April 2017 (2017-04-05) entire document | 1-10 |
| A | CN 108598488 A (DONGGUAN SHANSHAN BATTERY MATERIALS CO., LTD.) 28 September 2018 (2018-09-28) entire document | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 October 2021** | **26 October 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 207 331 A1**

## INTERNATIONAL SEARCH REPORT
### Information on patent family members

International application No.

**PCT/CN2021/104958**

| Patent document cited in search report | | | Publication date (day/month/year) | Patent family member(s) | | | Publication date (day/month/year) |
|---|---|---|---|---|---|---|---|
| CN | 113036081 | A | 25 June 2021 | None | | | |
| CN | 101816083 | A | 25 August 2010 | WO | 2009141991 | A1 | 26 November 2009 |
| | | | | EP | 2296207 | A1 | 16 March 2011 |
| | | | | JP | 2009283354 | A | 03 December 2009 |
| | | | | CN | 101816083 | B | 06 February 2013 |
| | | | | US | 2010209763 | A1 | 19 August 2010 |
| CN | 101640290 | A | 03 February 2010 | CN | 101640290 | B | 07 May 2014 |
| | | | | JP | 2010056076 | A | 11 March 2010 |
| | | | | US | 2010028786 | A1 | 04 February 2010 |
| | | | | US | 8679676 | B2 | 25 March 2014 |
| CN | 109671950 | A | 23 April 2019 | US | 2019115598 | A1 | 18 April 2019 |
| | | | | US | 10784515 | B2 | 22 September 2020 |
| | | | | JP | 2019075222 | A | 16 May 2019 |
| CN | 106558681 | A | 05 April 2017 | JP | 2017062939 | A | 30 March 2017 |
| | | | | JP | 6296030 | B2 | 20 March 2018 |
| | | | | US | 2017092988 | A1 | 30 March 2017 |
| | | | | CN | 106558681 | B | 13 August 2019 |
| CN | 108598488 | A | 28 September 2018 | CN | 108598488 | B | 01 December 2020 |

Form PCT/ISA/210 (patent family annex) (January 2015)

24

**REFERENCES CITED IN THE DESCRIPTION**

**Patent documents cited in the description**

- CN 202110242963